Europäisches Patentamt

European Patent Office

Office européen des brevets

(19)

(11) Veröffentlichungsnummer: **0 176 820**
**A2**

(12)

# EUROPÄISCHE PATENTANMELDUNG

(21) Anmeldenummer: **85111421.5**

(22) Anmeldetag: **10.09.85**

(51) Int. Cl.⁴: **G 02 B 6/38**

(30) Priorität: **13.09.84 DE 3433673**

(43) Veröffentlichungstag der Anmeldung:
**09.04.86 Patentblatt 86/15**

(84) Benannte Vertragsstaaten:
**AT BE CH DE FR GB IT LI LU NL SE**

(71) Anmelder: **Siemens Aktiengesellschaft**
**Berlin und München Wittelsbacherplatz 2**
**D-8000 München 2(DE)**

(72) Erfinder: **Kraft, Hans-Peter, Dipl.-Phys.**
**Rechpacherstrasse 42**
**D-8000 München 21(DE)**

(54) **Steckerteil für lösbare Steckverbindungen von Lichtwellenleitern.**

(57) Bei einem Steckerteil mit einem zylindrischen Trägerrohr (T1), in dem eine Lichtleitfaser (L) zentrisch fixiert ist und mit einer zur Achse des Trägerrohres (T1) normalen, plan bearbeiteten Endfläche (E) ist zur Vermeidung störender Reflexionen die Stirnfläche der Lichtleitfaser (L) gegenüber der Endfläche (E) um einen definierten Bertrag (t1) zurückgesetzt. Dieser definierte Betrag (t1) liegt dabei im Bereich um $n.\lambda/2$, wenn ein derartiger Steckerteil mit einem konventionellen Steckerteil gepaart wird und im Bereich um $n.\lambda/4$, wenn zwei derartige Steckerteile gepaart werden, wobei n eine ganze natürliche Zahl und $\lambda$ die Wellenlänge des zu leitenden Lichts ist. Der Versatz (t1) zwischen der Stirnfläche der Lichtleitfaser (L) und der Endfläche (E) wird vorzugsweise durch eine in die Endfläche (E) eingebrachte Quernut (Q1) erzeugt.

FIG 3

EP 0 176 820 A2

0176820

Siemens Aktiengesellschaft
Berlin und München

Unser Zeichen

VPA 84 P 1690 E

Steckerteil für lösbare Steckverbindungen von Lichtwellenleitern
_____

Die Erfindung betrifft ein Steckerteil für lösbare Steckverbindungen von Lichtwellenleitern nach dem Oberbegriff des
Anspruchs 1.

Ein derartiger Steckerteil ist beispielsweise aus der
DE-PS 25 16 858 bekannt. Bei dem dort beschriebenen Steckerteil wird die im Endbereich von ihrer Ummantelung befreite
Lichtleitfaser in die Bohrung eines zylindrischen Trägerrohres eingeführt und dort durch Klebung zentrisch fixiert.
Anschließend wird das Faserende zusammen mit der Stirnfläche
des Trägerrohrs überschliffen und poliert, so daß eine plane
Endfläche entsteht, die möglichst genau senkrecht zum Außendurchmesser des Trägerrohres ausgerichtet sein soll. Zur
Herstellung einer Steckverbindung werden zwei dieser
Steckerteile in eine genau passende gemeinsame Hülse eingeführt und über eine Feder oder eine Schraubmuffe mit ihren
Endflächen gegeneinander gepreßt. Durch diese axiale
Pressung sollen die Endflächen plan aufeinanderliegen, wodurch insbesondere eine Strahlreflexion verhindert werden
soll.

Bei den bekannten Steckverbindungen werden die axialen
Steckkräfte zumindest in einem erheblichen Maße von den
Lichtleitfasern aufgenommen. Bereits aufgrund dieser
mechanischen Spannungen kann es dann zu einer Verschiebung
der Lichtleitfasern kommen. Insbesondere bei Temperaturwechselbeanspruchungen beginnt die die Lichtleitfasern umgebende Klebeschicht zu arbeiten und schiebt sich über die

Klk 1 Kow / 13.9.1984

Endfläche. Durch den dadurch entstehenden Luftspalt zwischen den beiden Steckerteilen einer Steckverbindung entstehen wieder störende Reflexionen.

Aus der DE-AS 26 52 712 ist eine lösbare Steckverbindung von Lichtwellenleitern bekannt, bei welchen zwischen den Endflächen der Trägerrohre beider Steckerteile eine Distanzringscheibe eingesetzt ist, durch welche ein genau definierter Abstand zwischen den Stirnflächen der Lichtleitfasern erreicht werden soll, so daß in diesem Verbindungsabschnitt keine Lichtbrechung erfolgen kann. Der genannte definierte Abstand müßte also über die Stärke der Distanzringscheibe auf Bruchteile der Wellenlänge $\lambda$ des zu leitenden Lichtes abgestimmt werden, was mit den bekannten mechanischen Bearbeitungsverfahren praktisch nicht durchführbar ist.

Aus der DE-AS 19 53 283 ist es ebenfalls bekannt, bei einer lösbaren Steckverbindung von Lichtwellenleitern zwischen den Endflächen der Trägerrohre beider Steckerteile eine Distanzringscheibe einzusetzen. Gemäß einer Variante soll es aber auch möglich sein, einen genau definierten Abstand zwischen den Stirnflächen der Lichtleitfasern dadurch zu erreichen, daß mit Hilfe einer Halterungs- und Justiereinrichtung die übertragene Lichtenergie auf den maximalen Wert eingestellt wird. Halterungs- und Justiereinrichtungen, die eine derart genaue Festlegung der Interferometerlänge gewährleisten, stehen in der Praxis jedoch nicht zur Verfügung.

Der Erfindung liegt die Aufgabe zugrunde, eine in der Praxis realisierbare Lösung anzugeben, wie bei lösbaren Steckverbindungen von Lichtwellenleitern Reflexionen an den Grenzflächen sowohl des Einkoppel- wie auch des Auskoppelsteckers auf äußerst geringe Beträge reduziert oder ganz vermieden werden können.

Diese Aufgabe wird bei einem gattungsgemäßen Steckerteil durch die kennzeichnenden Merkmale des Anspruchs 1 gelöst.

Der Erfindung liegt die Erkenntnis zugrunde, daß zumindest bei einem Steckerteil einer lösbaren Steckverbindung die Stirnfläche der Lichtleitfaser gegenüber der Endfläche um einen definierten Betrag zurückgesetzt werden muß und daß sich dann bei einer richtigen Festlegung dieses definierten Betrages die an den beiden Grenzflächen Glas/Luft der Steckverbindung reflektierten Wellenanteile ganz oder bis auf einen geringen Restbetrag auslöschen. Insbesondere kann ein derartiger Versatz zwischen der Endfläche des Trägerrohres und der Stirnfläche der Lichtleitfaser mit Hilfe bekannter mechanischer Bearbeitungsverfahren wie Schleifen, Läppen und Polieren hinreichend genau realisiert werden. Bei der fertigen Steckverbindung entsteht dann zwischen den Stirnflächen der beiden Lichtleitfasern ein definierter Abstand, der von der zu koppelnden Welle und der Lichtleitfaser, insbesondere von der Bandbreite der Strahlung und der numerischen Apertur der Lichtleitfaser abhängig ist und im Bereich von $n \cdot \lambda/2$ liegt, wobei n eine ganze natürliche Zahl und $\lambda$ die Wellenlänge des zu leitenden Lichts ist. Dieser Abstand zwischen den Stirnflächen der beiden Lichtleitfasern einer Steckverbindung ist immer dann optimal bemessen, wenn ein maximaler Energiedurchgang gemessen wird und damit minimale Dämpfungsverluste vorliegen.

Durch die Verwendung erfindungsgemäß ausgebildeter Steckerteile wird einerseits die Steckerdämpfung vermindert und andererseits die einen eventuell angekoppelten Halbleiterlaser sehr störende kohärente Reflexionswelle vermieden. Die Lichtleitfasern können dabei wie bisher in ihrem Trägerrohr entweder durch Einkleben oder durch Aufschrumpfen des Trägerrohres befestigt werden. Bei der fertigen Steckverbindung werden nur die polierten Endflächen gegeneinander gepreßt, während die Lichtleitfasern in axialer Richtung nicht beansprucht werden. Somit können auch Temperaturwechselbeanspruchungen zu keiner Erhöhung der Steckerdämpfung führen.

Ein erfindungsgemäß ausgebildeter Steckerteil kann dann für lösbare Steckverbindungen mit einem zweiten Steckerteil eingesetzt werden, bei dem die Stirnfläche der Lichtleitfaser in der Ebene der Endfläche liegt. In diesem Fall ist dann bei dem ersten Steckerteil die Stirnfläche der Lichtleitfaser gegenüber der Endfläche um einen definierten Betrag im Bereich um $n \cdot \lambda/2$ zurückgesetzt, wobei n eine ganze natürliche Zahl und $\lambda$ die Wellenlänge des zu leitenden Lichts ist.

Ein erfindungsgemäß ausgebildeter Steckerteil kann aber auch für lösbare Steckverbindungen mit einem zweiten gleich ausgebildeten Steckerteil eingesetzt werden. In diesem Fall ist dann bei beiden Steckerteilen die Stirnfläche der Lichtleitfaser gegenüber der Endfläche um einen definierten Betrag im Bereich um $n \cdot \lambda/4$ zurückgesetzt, wobei n eine ganze natürliche Zahl und $\lambda$ die Wellenlänge des zu leitenden Lichts ist. Die Zahlen n können für die beiden Steckerteile auch verschieden sein, die Summe der beiden Zahlen n der beiden Steckerteile muß dann aber eine ganze, gerade, natürliche Zahl ergeben.

Gemäß einer besonders bevorzugten Ausgestaltung der Erfindung ist in die Endfläche eine senkrecht zur Achse des Trägerrohrs ausgerichtete Quernut eingebracht, wobei die Breite der Quernut größer als der Außendurchmesser der Lichtleitfaser ist und wobei die Tiefe der Quernut den Versatz der Stirnfläche der Lichtleitfaser gegenüber der Endfläche definiert. Der erfindungsgemäße Versatz zwischen der Stirnfläche der Lichtleitfaser und der Endfläche kann also auf besonders einfache Weise durch das definierte Einbringen einer Quernut in die Endfläche hergestellt werden.

Der Versatz zwischen der Stirnfläche der Lichtleitfaser und der Endfläche kann aber auch dadurch hergestellt werden, daß in die Endfläche eine zylindrische axiale Vertiefung mit einer zur Achse des Trägerrohres senkrecht ausgerichteten Grundfläche eingebracht wird, wobei der Durchmesser der Vertiefung größer als der Außendurchmesser der Lichtleitfaser ist und wobei die Tiefe der Vertiefung den Versatz der Stirnfläche der Lichtleitfaser gegenüber der Endfläche definiert.

Im folgenden werden Ausführungsbeispiele der Erfindung anhand der Zeichnung näher erläutert.
Es zeigen:

Figur 1 und Figur 2 eine erste bevorzugte Ausführungsform eines Steckerteils für lösbare Steckverbindungen von Lichtwellenleitern im Längsschnitt bzw. in der stirnseitigen Draufsicht,

Figur 3 und Figur 4 eine zweite Ausführungsform eines Steckerteils für lösbare Steckverbindungen von Lichtwellenleitern im Längsschnitt bzw. in der stirnseitigen Draufsicht,

Figur 5 einen Längsschnitt durch eine lösbare Steckverbindung von Lichtwellenleitern, bei welcher ein Steckerteil gemäß Figur 1 mit einem herkömmlichen Steckerteil gepaart ist und

Figur 6 einen Längsschnitt durch eine lösbare Steckverbindung von Lichtwellenleitern, bei welcher zwei erfindungsgemäß ausgestaltete Steckerteile miteinander gepaart sind.

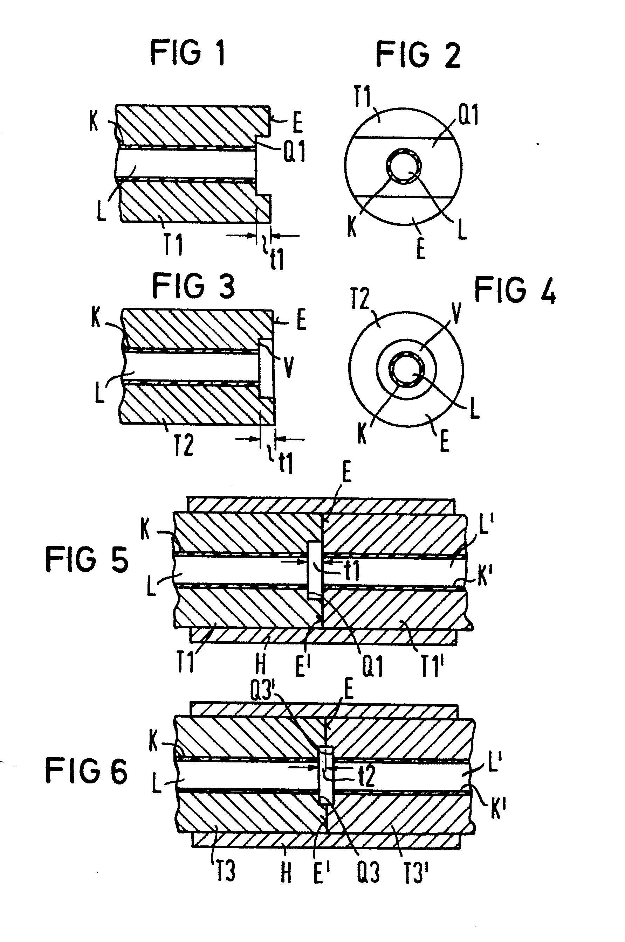

Die Figuren 1 und 2 zeigen eine erste Ausführungsform eines Steckerteils, bei welchem das von seiner Ummantelung befreite Ende einer Lichtleitfaser L mit Hilfe einer Klebeschicht K in einem zylindrischen Trägerrohr T1 zentrisch zum Außendurchmesser justiert und fixiert ist. Nach Planschleifen und Polieren der stirnseitigen Endfläche E des Steckerteils senkrecht zur Achse des Trägerrohres T1 wird eine Quernut Q1 senkrecht zur Achse des Steckerteils über die Endfläche E angebracht. Die Breite der Quernut Q1 ist größer als der Außendurchmesser der Lichtleitfaser L. Die Tiefe tl der Quernut Q1 liegt im ungefähr Bereich um $n \cdot \lambda/2$, wobei n eine ganze natürliche Zahl und $\lambda$ die Wellenlänge des zu leitenden Lichts ist.

Die Figuren 3 und 4 zeigen eine zweite Ausführungsform eines Steckerteils, bei welchem das von seiner Ummantelung befreite Ende der Lichtleitfaser L mit Hilfe einer Klebeschicht K in einem zylindrischen Trägerrohr T2 zentrisch zum Außendurchmesser justiert und fixiert ist. Abweichend von der in den Figuren 1 und 2 dargestellten ersten Ausführungsform wurde hier in die polierte Endfläche E eine zylindrische axiale Vertiefung V eingebracht, deren Grundfläche senkrecht zur Achse des Trägerrohres T2 ausgerichtet ist. Der Durchmesser dieser Vertiefung V ist größer als der Außendurchmesser der Lichtleitfaser L. Die Tiefe tl der Vertiefung V liegt wieder wie bei der ersten Ausführungsform ungefähr im Bereich um $n \cdot \lambda/2$.

Figur 5 zeigt den Einsatz des in den Figuren 1 und 2 dargestellten Steckerteils bei einer lösbaren Steckverbindung für Lichtwellenleiter. Der zweite Steckerteil dieser Steckverbindung besteht aus einem Trägerrohr T1', in welchem das von seiner Ummantelung befreite Ende einer Lichtleitfaser L' mit Hilfe einer Klebeschicht K' zentrisch fixiert ist. Dieser zweite Steckerteil ist mit einer Endfläche E' versehen, die durch gemeinsames Planschleifen und Polieren der Stirnfläche der Lichtleitfaser L' und des Trägerrohres T1' hergestellt wurde. Werden bei der fertigen Steckverbindung die beiden Endflächen E und E' der in eine gemeinsame Hülse H eingesetzten Steckerteile durch eine in der Zeichnung nicht dargestellte Feder oder Schraubmuffe gegeneinander gepreßt, so entspricht der Abstand zwischen den Stirnflächen der Lichtleitfasern L und L' der Tiefe t1 der Quernut Q1. Da die Tiefe t1 im Bereich um n . $\lambda/2$ liegt, löschen sich die an den beiden Grenzflächen Glas/Luft in der Quernut Q1 reflektierten Wellenanteile ganz oder bis auf einen geringen Restbetrag aus.

Figur 6 zeigt eine lösbare Steckverbindung für Lichtwellenleiter, bei welcher zwei genau gleich ausgebildete Steckerteile in eine gemeinsame Hülse H eingesetzt sind. Die miteinander gekoppelten Lichtleitfasern L und L' sind dabei mit Hilfe von Klebeschichten K bzw. K' in dem zugeordneten Trägerrohr T3 bzw. T3' zentrisch fixiert. In die polierten Endflächen E und E' der beiden Steckerteile sind Quernuten Q3 bzw. Q3' eingebracht, deren Tiefe t2 im Bereich um n . $\lambda/4$ liegt. Werden die Endflächen E und E' gegeneinander gepreßt, so weisen die Stirnflächen der Lichtleitfasern L und L' einen Abstand im Bereich von n . $\lambda/2$ auf. Somit löschen sich auch hier die an den beiden Grenzflächen Glas/Luft in den Quernuten Q3 und Q3' reflektierten Wellenanteile ganz oder bis auf einen geringen Restbetrag aus.

5 Patentansprüche
6 Figuren

Patentansprüche

1. Steckerteil für lösbare Steckverbindungen von Lichtwellenleitern, mit einem zylindrischen Trägerrohr, in dem eine Lichtleitfaser zentrisch fixiert ist und mit einer zur Achse des Trägerrohres normalen, plan bearbeiteten Endfläche, dadurch g e k e n n z e i c h n e t , daß die Stirn-fläche der Lichtleitfaser (L) gegenüber der Endfläche (E) um einen definierten Betrag (t1; t2) zurückgesetzt ist.

2. Steckerteil nach Anspruch 1, für lösbare Steckverbindungen mit einem zweiten Steckerteil, bei dem die Stirnfläche der Lichtleitfaser in der Ebene der Endfläche liegt, dadurch g e k e n n z e i c h n e t , daß die Stirnfläche der Lichtleitfaser (L) gegenüber der Endfläche (E) um einen de-finierten Betrag (t1) im Bereich um n. $\lambda/2$ zurückgesetzt ist, wobei n eine ganze natürliche Zahl und $\lambda$ die Wellenlän-ge des zu leitenden Lichts ist.

3. Steckerteil nach Anspruch 1, für lösbare Steckverbindungen mit einem zweiten, gleich ausgebildeten Steckerteil, da-durch g e k e n n z e i c h n e t , daß die Stirnflä-che der Lichtleitfaser (L) gegenüber der Endfläche (E) um einen definierten Betrag (t2) im Bereich um n. $\lambda/4$ zurück-gesetzt ist, wobei n eine ganze natürliche Zahl und $\lambda$ die Wellenlänge des zu leitenden Lichts ist.

4. Steckerteil nach einem der vorhergehenden Ansprüche, dadurch g e k e n n z e i c h n e t , daß in die End-fläche (E) eine senkrecht zur Achse des Trägerrohres (T1; T3) ausgerichtete Quernut (Q1; Q3) eingebracht ist, wobei die Breite der Quernut (Q1; Q3) größer als der Außendurchmesser der Lichtleitfaser (L) ist und wobei die Tiefe (t1; t2) der Quernut (Q1; Q3) den Versatz der Stirnfläche der Lichtleitfaser (L) gegenüber der Endfläche (E) definiert.

5. Steckerteil nach einem der Ansprüche 1 bis 3, dadurch g e k e n n z e i c h n e t , daß in die Endfläche (E) eine zylindrische axiale Vertiefung (V) mit einer senkrecht zur Achse des Trägerrohres (T2) ausgerichteten Grundfläche eingebracht ist, wobei der Durchmesser der Vertiefung (V) größer als der Außendurchmesser der Lichtleitfaser (L) ist und wobei die Tiefe (t1) der Vertiefung (V) den Versatz der Stirnfläche der Lichtleitfaser (L) gegenüber der Endfläche (E) definiert.

0176820

1/1

FIG 1  FIG 2

FIG 3  FIG 4

FIG 5

FIG 6